(19) Europäisches Patentamt / European Patent Office / Office européen des brevets

(11) **EP 1 983 228 A1**

(12) **DEMANDE DE BREVET EUROPEEN**

(43) Date de publication:
**22.10.2008 Bulletin 2008/43**

(51) Int Cl.:
*F16H 61/04* (2006.01)    *F16H 61/28* (2006.01)
*F16H 59/46* (2006.01)

(21) Numéro de dépôt: **08305097.1**

(22) Date de dépôt: **10.04.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **17.04.2007 FR 0754519**

(71) Demandeur: **Peugeot Citroën Automobiles SA
78140 Vélizy-Villacoublay (FR)**

(72) Inventeurs:
• **Schaeffer, Eric
92250 La Garenne-Colombes (FR)**
• **Valayer, Florent
78570 Andresy (FR)**

(54) **Procédé d'optimisation de pilotage des synchroniseurs d'une boîte de vitesses lors d'un changement de rapport de vitesse**

(57) L'invention concerne un procédé d'optimisation de pilotage des synchroniseurs d'une boîte (4) de vitesses lors d'un changement de rapport de vitesse. Lors de la phase de synchronisation, on applique un couple (Csyn) de synchronisation au synchroniseur (18) du rapport (RF) final, qui est fonction de l'écart de régime (Wdiff) entre le rapport initial (RI) et le rapport final (RF) et des caractéristiques du synchroniseur (18), de sorte que le temps de synchronisation est optimisé en respectant la puissance maximale (Pmax) admissible par le synchroniseur (18).

Fig. 2

**Description**

L'invention concerne un procédé d'optimisation de pilotage des synchroniseurs d'une boîte de vitesses lors d'un changement de rapport de vitesse. L'invention a notamment pour but de limiter le temps de synchronisation lors du changement de rapport de vitesse. L'invention trouve une application particulièrement avantageuse avec les boîtes de vitesses comportant des actionneurs assurant le déplacement des crabots de la boîte de vitesses.

Les véhicules connus comportent une chaîne de traction formée par un dispositif de propulsion (formé par un moteur thermique et/ou une machine électrique), un embrayage, et une boîte de vitesses qui entraîne les roues du véhicule. L'embrayage est relié d'une part au dispositif de propulsion et d'autre part à la boîte de vitesses, elle-même reliée aux roues.

Plus précisément, la boîte de vitesses comporte un arbre primaire relié à l'embrayage et un arbre secondaire relié aux roues du véhicule, ces deux arbres étant reliés entre eux par l'intermédiaire d'engrenages formant les rapports de vitesse.

Chaque engrenage comporte une roue reliée sur un des arbres et un pignon fou monté sur l'autre arbre. Des crabots munis chacun d'un synchroniseur sont utilisés pour lier sélectivement les pignons fous à l'arbre sur lequel ils sont montés afin d'assurer un passage de vitesse.

A cet effet, le crabot est lié en rotation à son arbre mais est mobile axialement pour permettre un accrochage avec un pignon fou. On parle de crabotage lorsque le crabot entre en coopération avec le pignon fou de sorte qu'un rapport de vitesse est engagé, et de décrabotage lorsque le crabot se dégage du pignon fou de sorte que le rapport est désengagé.

Les synchroniseurs montés sur les crabots ont pour rôle d'amener le crabot et le pignon fou à engrener à des vitesses de rotation identiques avant de réaliser le crabotage. En effet, lors d'un changement de rapport de vitesse, le crabot est lié à l'arbre secondaire qui est relié aux roues, tandis que le pignon fou du rapport à engager est relié à l'arbre primaire (ou inversement). Or l'arbre primaire et l'arbre secondaire tournent à des vitesses différentes. Le synchroniseur permet alors de synchroniser le régime de l'arbre primaire avec celui de l'arbre secondaire relié aux roues.

Le pilotage des changements de rapports de boîte de vitesses pilotées utilise des tables en fonction des conditions véhicules et de la volonté du conducteur. Plus le passage est déterminé comme devant être « sportif», plus le temps de synchronisation doit être court. Le document FR-A-2799256 décrit la possibilité de sélectionner l'intervalle de temps de synchronisation selon la nature du changement de rapport de vitesses (montée ou descente) et le mode de conduite (sportif ou économique).

La caractéristique principale d'un synchroniseur est que le temps de synchronisation diminue lorsque l'effort appliqué à ce synchroniseur augmente. En outre, la vitesse de montée en effort est un critère permettant de diminuer le temps de synchronisation à iso-effort maximal appliqué. Afin de réduire le temps de synchronisation, il faut donc augmenter la vitesse de montée en effort et l'effort maximal de synchronisation.

Toutefois, une des limites du système de synchronisation réside dans la puissance dissipée par le synchroniseur sans risque de détérioration de ses composants.

L'invention se propose de tenir compte de ces paramètres pour diminuer le temps de changement de rapport de vitesse.

A cet effet, l'invention consiste en une stratégie de pilotage des synchroniseurs avec comme critère d'entrée la puissance maximale admissible par le synchroniseur. Cette puissance dépend des matériaux du synchroniseur et de la surface de frottement entre le pignon fou et le synchroniseur. L'invention consiste ainsi en l'utilisation optimale des caractéristiques de tenue en puissance des synchroniseurs.

L'invention permet de garantir un temps de synchronisation optimisé, le plus court possible, quel que soit le type de passage, sans provoquer d'endommagement au mécanisme du synchroniseur.

Dans une mise en oeuvre de l'invention, à l'instant de la demande de passage de rapport, par action du conducteur et/ou par le mode automatique de changement de rapport de vitesse, on mémorise des conditions véhicule telles que le régime arbre primaire, le régime des roues, et on calcule l'écart de régime entre le rapport initial et le rapport final.

En fonction de ces conditions et des caractéristiques des synchroniseurs, une rampe de montée en effort ainsi qu'un effort maximal sont appliqués à l'actionneur de passage afin d'appliquer un couple de synchronisation qui permet d'optimiser le temps de synchronisation tout en respectant la puissance maximale admissible par le synchroniseur.

L'invention concerne donc un procédé d'optimisation de pilotage des synchroniseurs d'une boîte de vitesses lors d'un changement de rapport de vitesse pour passer d'un rapport initial à un rapport final, ce procédé étant mis en oeuvre avec une boîte de vitesses d'un véhicule, notamment d'un véhicule automobile, comportant :

- un arbre primaire relié à un dispositif de propulsion via un embrayage et un arbre secondaire relié aux roues du véhicule,
- l'arbre primaire et l'arbre secondaire étant reliés entre eux par l'intermédiaire d'un premier engrenage formant le rapport initial et d'un deuxième engrenage formant le rapport final, et

- un crabot muni d'un synchroniseur associé au rapport final,

caractérisé en ce que, lors de la phase de synchronisation du crabot avec le rapport final,

- on applique un couple de synchronisation au synchroniseur du rapport final,
- ce couple de synchronisation étant fonction de l'écart de régime entre le rapport initial et le rapport final, et des caractéristiques du synchroniseur, de sorte que le temps de synchronisation est optimisé en respectant la puissance maximale admissible par le synchroniseur.

Selon une mise en oeuvre, le couple de synchronisation présente une rampe de montée en effort jusqu'à un couple de synchronisation maximal, le couple de synchronisation maximal étant appliqué jusqu'à ce que le régime du rapport final soit atteint par l'arbre primaire.

Selon une mise en oeuvre, la rampe de monté en effort en fonction du temps est une valeur fixée qui dépend de la capacité de l'actionneur du synchroniseur.

Selon une mise en oeuvre, le couple de synchronisation maximal vaut :

$$CsynMax = c + d$$

*avec*

$$c = \sqrt[3]{\frac{-q + \sqrt{q^{2+}\frac{4p^3}{27}}}{2}} \text{ et } d = \sqrt[3]{\frac{-q - \sqrt{q^{2+}\frac{4p^3}{27}}}{2}}$$

*où*

$$p = -\frac{2 \cdot a \cdot b \cdot Wdiff}{Jap} \quad et \quad q = \frac{P\max \cdot 2 \cdot a \cdot b}{Jap}$$

Wdiff étant l'écart de régime entre le rapport (RI) initial et le rapport (RF) final,

Pmax étant la puissance maximale admissible par le synchroniseur (18),

Jap étant l'inertie des pièces tournantes soumises au couple de synchronisation, Jap étant calculée en fonction du rapport final à synchroniser,

a étant le couple de synchronisation par unité d'effort qui dépend des caractéristiques géométriques du synchroniseur.

Selon une mise en oeuvre, pour calculer l'écart de régime entre le rapport initial et le rapport final :

- à l'instant de la demande du changement de rapport, on mesure le régime de l'arbre primaire et le régime de l'arbre secondaire, et
- à partir des rapports de démultiplication du rapport initial et du rapport final, on calcule l'écart de régime entre ces rapports.

Selon une mise en oeuvre, la puissance maximale admissible par le synchroniseur et le couple de synchronisation par unité d'effort sont mémorisées dans le calculateur de la boîte de vitesses.

Selon une mise en oeuvre, le changement de rapport est commandé par le conducteur et/ou par le mode automatique de changement de rapport.

L'invention sera mieux comprise à la lecture de la description qui suit et à l'examen des figures qui l'accompagnent. Ces figures ne sont données qu'à titre illustratif mais nullement limitatif de l'invention. Elles montrent :

- figure 1 : une représentation schématique d'une chaîne de traction de véhicule mettant en oeuvre le procédé selon l'invention ;

- figure 2 : une représentation schématique d'une boîte de vitesses de la chaîne de traction du véhicule de la figure 1 ;
- figure 3 : un diagramme de mise en oeuvre du procédé selon l'invention ;
- figure 4 : des représentations graphiques montrant respectivement l'évolution du régime de l'arbre primaire et du couple de consigne appliqué au synchroniseur lors d'un changement de rapport de vitesse.

Les éléments identiques conservent la même référence d'une figure à l'autre.

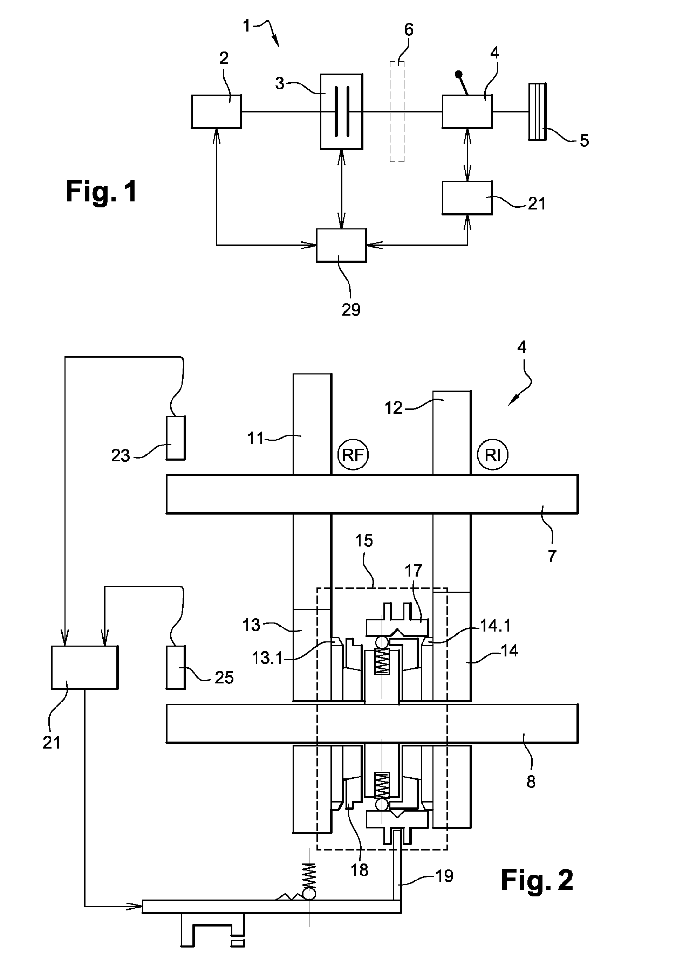

La figure 1 montre un véhicule 1 comportant une chaîne de traction formée par un moteur 2 thermique, un embrayage 3 relié d'une part à ce moteur 2 thermique et d'autre part à une boîte 4 de vitesses. Cette boîte 4 de vitesses est reliée aux roues 5 du véhicule.

En variante, lorsque le véhicule 1 est hybride, la chaîne de traction est complétée par une machine 6 électrique positionnée sur l'arbre d'entrée de la boîte 4 de vitesse entre l'embrayage 3 et la boîte 4 de vitesses.

La figure 2 montre une vue détaillée de la boîte 4 de vitesses.

En référence aux figures 1 et 2, la boîte de vitesses comporte un arbre 7 primaire relié à l'embrayage 3 et un arbre 8 secondaire relié aux roues 5. Ces deux arbres 7 et 8 sont reliés entre eux par l'intermédiaire d'engrenages formant les rapports de vitesse RI et RF (ici seulement deux engrenages sont représentés pour faciliter la compréhension).

Le rapport initial RI et le rapport final RF sont respectivement formés chacun par une roue 11, 12 entraînée par l'arbre 7 primaire et un pignon fou 13, 14 entraîné par l'arbre 8 secondaire.

Un crabot 15 à couronne est monté sur l'arbre 8 secondaire entre les deux engrenages. Le crabot 15 est lié en rotation à l'arbre 8 et comporte une couronne 17 mobile axialement. Cette couronne 17 comporte des dents sur la périphérie de sa face radiale destinées à entrer en coopération avec des dents 13.1, 14.1 des pignons fous 13, 14.

Lors d'un crabotage, la couronne 17 mobile se déplace vers le pignon fou du rapport à engager et engrène avec lui, de sorte que le pignon fou se lie en rotation à l'arbre 8. Lors d'un décrabotage, la couronne 17 mobile se dégage du pignon fou, de sorte que ce pignon fou n'est plus lié en rotation avec l'arbre 8.

Le crabot 15 est également muni d'un synchroniseur 18 qui a pour rôle d'amener le crabot 15 et le pignon 13 ou 14 à engrener à des vitesses de rotation identiques avant de réaliser le crabotage.

Pour assurer les déplacements axiaux du crabot 15, la boîte 4 de vitesses comporte un actionneur 19 commandé par le calculateur 21 de boîte de vitesses. Le calculateur 21 commande également l'ouverture et la fermeture de l'embrayage 3.

En outre, un premier capteur 23 de vitesse mesurant la vitesse de rotation de l'arbre 7 primaire et un deuxième capteur 25 de vitesse mesurant la vitesse de rotation de l'arbre 8 secondaire sont reliés au calculateur 21.

Le véhicule 1 comporte également un superviseur 29 de chaîne de traction qui commande le moteur 2 thermique, l'embrayage 3 et le calculateur 21 de boîte de vitesses.

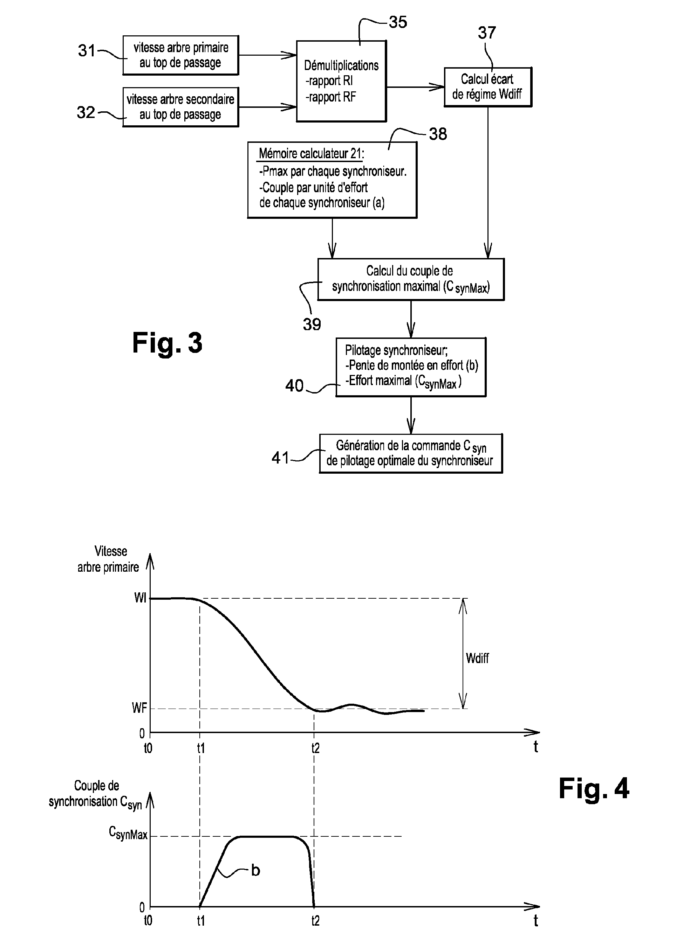

Lorsque le rapport initial RI est engagé à l'instant t0, la couronne 17 est crabotée avec le pignon fou 14, tandis que le pignon 13 est monté fou sur l'arbre 8 secondaire. Comme représenté sur la figure 4, l'arbre 7 primaire présente alors une vitesse de rotation WI.

En référence à la figure 3, lorsqu'un changement de vitesse est commandé à l'instant t1 (par le conducteur ou de manière automatique), le capteur 23 mesure, dans une étape 31, la vitesse de l'arbre 7 primaire et le capteur 25 mesure, dans une étape 32, la vitesse de l'arbre 8 secondaire. Le rapport RI est désengagé.

En fonction des rapports de démultiplication du rapport initial RI et du rapport final RF (indiqués par les lois 35 de passage de rapport permettant de connaître le rapport RF final), on en déduit, dans une étape 37, l'écart Wdiff entre le régime du crabot 15 et le régime du pignon 13 associé au rapport final RF à engrener. La valeur Wdiff est appliquée en entrée du bloc 39 de calcul du couple CsynMax de consigne maximal à appliquer au synchroniseur 18 pour optimiser le changement de rapport.

Par ailleurs, le calculateur 21 de boîte de vitesses comprend dans sa mémoire 38 la puissance maximal Pmax de synchronisation admissible pour chaque synchroniseur de la boîte 4 de vitesses, ainsi que le couple « a » par unité d'effort de chaque synchroniseur (couple de synchronisation généré pour 1N d'effort) qui dépendent des caractéristiques géométriques des synchroniseurs de la boîte 4 de vitesses. Les valeurs Pmax et a relatives au synchroniseur 18 du rapport final RF sont appliquées en entrée du bloc 39.

Détail des calculs effectués par le bloc 39 de paramétrage du pilotage du synchroniseur 18 permettant d'obtenir CsynMax :

En partant de l'expression suivante :

$$P\max = Wdiff \bullet CsynMax - \frac{1}{2} \bullet \left( Jap \bullet \left( \frac{(CsynMax)^3}{b \cdot a} \right) \right)$$

On en déduit que le couple maximal de synchronisation CsynMax à appliquer au synchroniseur en fonction de Pmax vaut :

$$CsynMax = c + d$$

avec

$$c = \sqrt[3]{\dfrac{-q + \sqrt{q^{2+}\dfrac{4p^3}{27}}}{2}} \text{ et } d = \sqrt[3]{\dfrac{-q - \sqrt{q^{2+}\dfrac{4p^3}{27}}}{2}}$$

où

$$p = -\dfrac{2 \cdot a \cdot b \cdot Wdiff}{Jap} \quad et \quad q = \dfrac{P\max \cdot 2 \cdot a \cdot b}{Jap}$$

Jap étant l'inertie connue a priori des pièces tournantes soumises au couple de synchronisation, Jap étant calculée en fonction du rapport RF à synchroniser,
b étant la rampe de montée en effort de synchronisation en fonction du synchroniseur 18 et de l'écart Wdiff. Les rampes b de montée en effort de synchronisation ont des valeurs dépendantes de l'architecture de l'actionneur et des synchroniseurs. On peut donc figer une valeur en fonction de la capacité de l'actionneur, par exemple 14000 N/s.
Dans une étape 40, on paramètre alors le pilotage du synchroniseur 18, de sorte qu'un couple Csyn de consigne ayant l'allure de la courbe représentée à la figure 4 soit appliqué au synchroniseur 18. Ce couple présente une rampe b de montée en effort jusqu'au couple CsynMax, CsynMax étant appliqué jusqu'à l'instant t2 auquel la synchronisation avec le rapport RF est terminée.
A cet effet, dans une étape 41, entre t1 et t2, l'actionneur 19 est commandé de sorte que le couple Csyn de consigne soit appliqué au synchroniseur 18.
Entre t1 et t2, la vitesse du crabot 15 et la vitesse du pignon 13 fou du rapport RF final se synchronisent alors entre elles. Comme le passage du rapport RI initial au rapport RF final correspond ici à un passage montant, la synchronisation du crabot 15 avec le rapport RF final engendre une diminution du régime de l'arbre 7 primaire.
A l'instant t2, lorsque le régime de l'arbre 7 primaire a atteint le régime Wf du rapport final, le rapport final RF est craboté et aucun couple n'est appliqué au synchroniseur 18.
En variante, pour un passage descendant, la synchronisation du crabot 15 avec le rapport RF engendre une augmentation du régime de l'arbre 7 primaire.

**Revendications**

1. Procédé d'optimisation de pilotage des synchroniseurs d'une boîte (4) de vitesses lors d'un changement de rapport de vitesse pour passer d'un rapport (RI) initial à un rapport (RF) final, ce procédé étant mis en oeuvre avec une boîte (4) de vitesses d'un véhicule, notamment d'un véhicule automobile, comportant :

   - un arbre (7) primaire relié à un dispositif (2) de propulsion via un embrayage (3) et un arbre (8) secondaire relié aux roues (5) du véhicule,
   - l'arbre primaire (7) et l'arbre (8) secondaire étant reliés entre eux par l'intermédiaire d'un premier engrenage formant le rapport initial (RI) et d'un deuxième engrenage formant le rapport final (RF), et
   - un crabot (15) muni d'un synchroniseur (18) associé au rapport final,
   - procédé dans lequel, lors de la phase de synchronisation du crabot (15) avec le rapport final (RF),
   - on applique un couple (Csyn) de synchronisation au synchroniseur (18) du rapport final,
   - ce couple (Csyn) de synchronisation étant fonction de l'écart de régime (Wdiff) entre le rapport initial (RI) et le rapport final (RF), et des caractéristiques du synchroniseur (18),
   - le couple (Csyn) de synchronisation présentant une rampe b de montée en effort jusqu'à un couple (CsynMax) de synchronisation maximal, le couple (CsynMax) de synchronisation maximal étant appliqué jusqu'à ce que le régime (Wf) du rapport final soit atteint par l'arbre (8) primaire,
- **caractérisé en ce que** le couple (CsynMax) de synchronisation maximal vaut :

$$CsynMax = c + d$$

*avec*

$$c = \sqrt[3]{\dfrac{-q + \sqrt{q^{2+}\dfrac{4p^3}{27}}}{2}} \ \text{et} \ d = \sqrt[3]{\dfrac{-q - \sqrt{q^{2+}\dfrac{4p^3}{27}}}{2}}$$

*où*

$$p = -\dfrac{2 \cdot a \cdot b \cdot Wdiff}{Jap} \ et \ q = \dfrac{P\max \cdot 2 \cdot a \cdot b}{Jap}$$

Wdiff étant l'écart de régime entre le rapport (RI) initial et le rapport (RF) final,
Pmax étant la puissance maximale admissible par le synchroniseur (18),
Jap étant l'inertie des pièces tournantes soumises au couple de synchronisation, Jap étant calculée en fonction du rapport (RF) final à synchroniser,
a étant le couple de synchronisation par unité d'effort qui dépend des caractéristiques géométriques du synchroniseur (18).

2. Procédé selon la revendication 1, **caractérisé en ce que** :

   - la rampe (b) de monté en effort en fonction du temps est une valeur fixée qui dépend de la capacité de l'actionneur du synchroniseur (18).

3. Procédé selon la revendication 1 ou 2, **caractérisé en ce que** pour calculer l'écart de régime (Wdiff) entre le rapport initial et le rapport final :

   - à l'instant de la demande du changement de rapport, on mesure le régime de l'arbre (7) primaire et le régime de l'arbre (8) secondaire, et
   - à partir des rapports de démultiplication du rapport (RI) initial et du rapport (RF) final, on calcule l'écart (Wdiff) de régime entre ce rapport (RI) initial et ce rapport (RF) final.

4. Procédé selon l'une des revendications 1 à 3, **caractérisé en ce que** la puissance maximale (Pmax) admissible par le synchroniseur (18) et le couple de synchronisation par unité d'effort (a) sont mémorisées dans le calculateur (21) de la boîte (4) de vitesses.

5. Procédé selon l'une des revendications 1 à 4, **caractérisé en ce que** :

   - le changement de rapport de vitesse est commandé par le conducteur et/ou par le mode automatique de changement de rapport.

Fig. 1

Fig. 2

```
 31──┐  ┌─────────────────────┐              ┌──────────35─────┐        ┌───37
      │  │ vitesse arbre primaire│──────────▶│ Démultiplications│        │
      └─▶│   au top de passage  │             │  -rapport RI    │       ┌▼────────────┐
         └─────────────────────┘             │  -rapport RF    │─────▶ │ Calcul écart │
 32──┐  ┌─────────────────────┐         ┌───▶│                 │       │ de régime Wdiff│
      │  │ vitesse arbre secondaire│     │    └─────────────────┘       └──────┬──────┘
      └─▶│   au top de passage  │────────┘                                    │
         └─────────────────────┘                                             │
```

┌────────────────────────────38──┐
│ Mémoire calculateur 21:          │
│ -Pmax par chaque synchroniseur.  │
│ -Couple par unité d'effort        │
│  de chaque synchroniseur (a)      │
└──────────────────┬───────────────┘
                   │                              │
                   ▼                              ▼
         ┌──────────────────────────────────────────┐
         │        Calcul du couple de                │
         │   synchronisation maximal (C$_{synMax}$)  │
         └──────────────────┬───────────────────────┘
                 39         │

## Fig. 3

         ┌──────────────────────────────────────────┐
         │ Pilotage synchroniseur;                   │
         │ -Pente de montée en effort (b)            │
    40   │ -Effort maximal (C$_{synMax}$)            │
         └──────────────────┬───────────────────────┘
                            │
                            ▼
         ┌──────────────────────────────────────────┐
    41   │ Génération de la commande C$_{syn}$       │
         │ de pilotage optimale du synchroniseur     │
         └──────────────────────────────────────────┘

Fig. 4

**Office européen**

**des brevets**

# RAPPORT DE RECHERCHE EUROPEENNE

Numéro de la demande

EP 08 30 5097

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | DE 100 33 811 A1 (DAIMLER CHRYSLER AG [DE]) 7 février 2002 (2002-02-07) * alinéas [0022] - [0024] * ----- | 1-5 | INV. F16H61/04 F16H61/28 |
| A | GB 2 119 459 A (TOYOTA MOTOR CO LTD) 16 novembre 1983 (1983-11-16) * page 13, ligne 15-74; figures 1-4 * ----- | 1-5 | ADD. F16H59/46 |
| A | US 7 037 237 B2 (SAKAMOTO HIROSHI [JP] ET AL) 2 mai 2006 (2006-05-02) * colonne 17, ligne 10-65; figures 1-22 * ----- | 1-5 | |
| A | WO 01/44697 A (SIEMENS AG [DE]; WILD JOHANN [DE]; DEIML MATTHIAS [DE]) 21 juin 2001 (2001-06-21) * le document en entier * ----- | 1-5 | |
| A | FR 2 849 129 A (RENAULT SA [FR]) 25 juin 2004 (2004-06-25) * le document en entier * ----- | 1-5 | |
| A | EP 1 205 691 A (ISUZU MOTORS LTD [JP]) 15 mai 2002 (2002-05-15) * alinéas [0043], [0044]; figures 1-17 * ----- | 1-5 | DOMAINES TECHNIQUES RECHERCHES (IPC)<br><br>F16H |
| A | US 5 910 068 A (KRAUSS CHRISTIAN [DE] ET AL) 8 juin 1999 (1999-06-08) * le document en entier * ----- | 1-5 | |

Le présent rapport a été établi pour toutes les revendications

| Lieu de la recherche | Date d'achèvement de la recherche | Examinateur |
|---|---|---|
| Munich | 25 juin 2008 | Vogt-Schilb, Gérard |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
                                                        
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**   EP 08 30 5097

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-06-2008

| Document brevet cité au rapport de recherche | | Date de publication | Membre(s) de la famille de brevet(s) | | Date de publication |
|---|---|---|---|---|---|
| DE 10033811 | A1 | 07-02-2002 | AUCUN | | |
| GB 2119459 | A | 16-11-1983 | JP | 58184323 A | 27-10-1983 |
| | | | US | 4603596 A | 05-08-1986 |
| US 7037237 | B2 | 02-05-2006 | DE | 102004008361 A1 | 28-10-2004 |
| | | | JP | 2004293737 A | 21-10-2004 |
| | | | US | 2004192499 A1 | 30-09-2004 |
| WO 0144697 | A | 21-06-2001 | DE | 19961117 A1 | 05-07-2001 |
| | | | EP | 1238215 A1 | 11-09-2002 |
| FR 2849129 | A | 25-06-2004 | AUCUN | | |
| EP 1205691 | A | 15-05-2002 | JP | 2002147590 A | 22-05-2002 |
| | | | US | 2002053248 A1 | 09-05-2002 |
| US 5910068 | A | 08-06-1999 | DE | 19526273 A1 | 23-01-1997 |
| | | | WO | 9704254 A1 | 06-02-1997 |
| | | | EP | 0839295 A1 | 06-05-1998 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2799256 A